Europäisches Patentamt

European Patent Office

Office européen des brevets

(11) Veröffentlichungsnummer: **0 006 464**
A2

(12) # EUROPÄISCHE PATENTANMELDUNG

(21) Anmeldenummer: 79101689.2

(22) Anmeldetag: 31.05.79

(51) Int. Cl.³: **G 01 F 1/66**, G 01 P 5/00

(30) Priorität: 30.06.78 DE 2828937

(43) Veröffentlichungstag der Anmeldung: 09.01.80
Patentblatt 80/1

(84) Benannte Vertragsstaaten: **GB NL**

(71) Anmelder: **SIEMENS AKTIENGESELLSCHAFT Berlin und München, Postfach 261, D-8000 München 22 (DE)**

(72) Erfinder: **Mágori, Valentin, Dipl.-Phys., Limburgstrasse 17, D-8000 München 90 (DE)**

(54) Vorrichtung zum Messen von Strömungsgeschwindigkeiten mit Hilfe von Ultraschallschwingungen.

(57) Die Erfindung bezieht sich auf eine Vorrichtung zum Messen von Strömungsgeschwindigkeiten mit Hilfe von Ultraschallschwingungen, bei der eine erste und eine zweite aus je einem Sende- und je einem Empfangswandler bestehende Ultraschallmeßstrecken angeordnet sind und bei der sich jeweils eine zur Strömungsrichtung parallel orientierte Ausbreitungskomponente der Ultraschallschwingungen in Strömungsrichtung bzw. gegen die Strömungsrichtung einstellt. Die Vorrichtung ist dadurch gekennzeichnet, daß die erste Ultraschallmeßstrecke mit Ultraschallschwingungen einer ersten Frequenz und die zweite Ultraschallmeßstrecke mit Ultraschallschwingungen einer zweiten Frequenz betrieben werden, daß die erste Frequenz und die zweite Frequenz jeweils mittels einer an sich bekannten, einen spannungsgesteuerten Oszillator (VCO = voltage controlled oscillator) enthaltenden Phasenregelschleife (PLL = phaselocked loop) derart geregelt werden, daß sich am jeweils zugehörigen Empfangswandler unter allen Bedingungen eine auf das betreffende Sendesignal bezogene konstante Phasenlage des Empfangssignals einstellt, und daß die mittlere Strömungsgeschwindigkeit aus der Differenz zwischen der ersten Frequenz und der zweiten Frequenz abgeleitet wird.

EP 0 006 464 A2

SIEMENS AKTIENGESELLSCHAFT          Unser Zeichen
Berlin und München                  VPA 78 P 7058

Vorrichtung zum Messen von Strömungsgeschwindigkeiten
mit Hilfe von Ultraschallschwingungen

Die Erfindung bezieht sich auf eine Vorrichtung zum Messen von Strömungsgeschwindigkeiten mit Hilfe von Ultraschallschwingungen, bei der eine erste und eine zweite aus je einem Sende- und je einem Empfangswandler bestehende, einander kreuzende Ultraschallmeßstrecken angeordnet sind.

Zum Messen von Strömungsgeschwindigkeiten mit Hilfe von Ultraschallschwingungen sind im wesentlichen zwei Verfahren bekannt, nämlich die sog. Laufzeitdifferenzmessung mit der Phasendifferenzmessung als Spezialfall und die direkte Laufzeitmessung mit dem sog. Sing-around-Verfahren als Spezialfall.

Verfahren der zuerst genannten Art erfordern zwar einen relativ geringen Aufwand an elektronischen Einrichtungen, haben jedoch den Nachteil, daß die im allgemeinen nicht genau bekannte Schallgeschwindigkeit qua-

Pap 1 The / 28.6.1978

dratisch in das Meßergebnis eingeht. Bei Verfahren der zuletzt genannten Art ist das Meßergebnis von der Schallgeschwindigkeit unabhängig. Es ist jedoch eine hohe Präzision in der Laufzeitdefinition erforderlich, womit erst bei relativ großen Rohrdurchmessern mit zufriedenstellender Genauigkeit gemessen werden kann, vgl. z.B. Prof.Dr.-Ing. K.W. Bonfig: "Technische Durchflußmessung mit besonderer Berücksichtigung neuartiger Durchflußmeßverfahren", Vulkan-Verlag, Dr.W. Classen Nachfolger, Essen 1977, Seiten 131 bis 143, insbesondere Seiten 137 bis 138: "11.3.1. Direkte Laufzeitmessung".

Bei dem bekannten Sing-around-Verfahren werden Ultraschallschwingungsbündel als Impulse von einem Geber zu einem Empfänger übertragen, der durch ein elektrisches Signal die Empfangsbestätigung zum Geber meldet, womit wiederum ein neues Ultraschallschwingungsbündel ausgesendet wird. Aus der Retournierfrequenz ergibt sich eine Schwingung im hörbaren akustischen Bereich, wovon der Ausdruck "Sing-around" herrührt. Aus der Differenz der Retournierfrequenzen ergibt sich die Strömungsgeschwindigkeit.

Bei diesem bekannten Verfahren ist es nachteilig, daß der Triggerpunkt, in dem der Geber erneut eingeschaltet werden soll, nicht genügend genau reproduzierbar ist, so daß eine Ungenauigkeit des bekannten Verfahrens allein schon durch diese Tatsache gegeben ist.

Der Erfindung liegt die Aufgabe zugrunde, eine Vorrichtung zum Messen von Strömungsgeschwindigkeiten mit Hilfe von Ultraschallschwingungen zu schaffen, bei der die Schallgeschwindigkeit nicht in das Meßergebnis eingeht, keine Triggerprobleme bestehen und ein relativ geringer schaltungstechnischer Aufwand erforderlich ist.

Der Erfindung liegt der Gedanke zugrunde, daß bei einem dauernden Aussenden von Ultraschallschwingungen die Notwendigkeit zu einer Triggerung entfällt, da keine Schwingungsbündel ausgesendet werden, und daß eine zum Erreichen einer definierten Phasenlage des jeweiligen Empfangssignals bezogen auf das jeweilige Sendesignal notwendige Frequenzeinstellung dazu benutzt werden kann, die Strömungsgeschwindigkeit mittelbar zu bestimmen.

Die genannte Aufgabe wird durch eine wie eingangs erwähnte Vorrichtung zum Messen von Strömungsgeschwindigkeiten mit Hilfe von Ultraschallschwingungen, bei der eine erste und eine zweite aus je einem Sende- und je einem Empfangwandler bestehende Ultraschallmeßstrecken angeordnet sind und bei der sich jeweils eine zur Strömungsrichtung parallel orientierte Ausbreitungskomponente der Ultraschallschwingungen in Strömungsrichtung bzw. gegen die Strömungsrichtung einstellt, gelöst, die durch die im kennzeichnenden Teil des Patentanspruchs 1 angegebenen Merkmale gekennzeichnet ist.

Die Erfindung bietet den Vorteil, daß ein relativ geringer Aufwand zur Realisierung einer solchen Vorrichtung erforderlich ist und daß die Größe "Ausbreitungsgeschwindigkeit" der Ultraschallschwingungen als Bestimmungskriterium für die zu messende Strömungsgeschwindigkeit entfällt. Daraus ergeben sich wiederum verschiedene technische Vorteile, so u.a. die Unabhängigkeit des mit der erfindungsgemäßen Vorrichtung durchführbaren Meßverfahrens von physikalischen Eigenschaften des Meßmediums.

Weiterbildungen der Erfindung sind durch die in den kennzeichnenden Teilen der Patentansprüche 2 bis 8 angegebenen Merkmale gekennzeichnet.

0006464

78 P 7058

Die vorliegende Erfindung wird im folgenden an Hand einer ein Ausführungsbeispiel für die Erfindung betreffenden Figur erläutert.

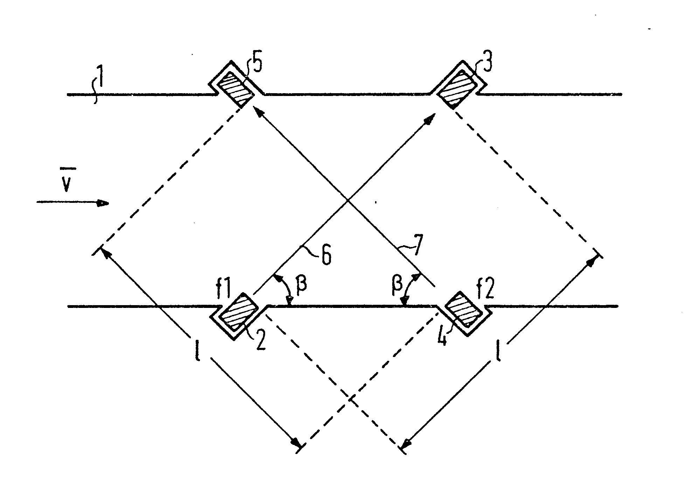

Die Figur zeigt den prinzipiellen Aufbau eines Ausführungsbeispiels für die Erfindung mit einem Strömungskanal 1, in dem in der gezeigten Weise eine erste Ultraschallmeßstrecke 6 und eine zweite Ultraschallmeßstrecke 7 einander kreuzend unter einem Anstellwinkel $\beta$ angeordnet sind. Die erste Ultraschallmeßstrecke 6 besteht aus einem ersten Sendewandler 2, der Ultraschallschwingungen mit einer ersten Frequenz f1 über die Länge der Meßstrecke 1 zu einem ersten Empfangswandler 3 sendet. Ein zweiter Sendewandler 4 sendet Ultraschallschwingungen mit einer zweiten Frequenz f2 über die zweite Ultraschallmeßstrecke 7 mit der Länge 1 zu einem zweiten Empfangswandler 5. Durch den Strömungskanal 1 fließt ein Medium mit einer mittleren Strömungsgeschwindigkeit $\overline{v}$. Über die beiden Ultraschallmeßstrecken 6, 7 werden Ultraschallschwingungen dauernd übertragen.

Eine jeweils für eine Ultraschallmeßstrecke vorgesehene, in der Figur nicht gezeigte Phasenregelschleife PLL mit einem jeweils dazugehörenden spannungsgesteuerten Oszillator VCO sorgt dafür, daß sich jeweils am Empfangswandler 3, 5 eine konstante Phasenlage bezogen auf das Signal am Sendewandler 2, 4 einstellt. Zu diesem Zweck wird jeweils ein durch Phasenvergleich zu gewinnendes Regelsignal an den erwähnten spannungsgesteuerten Oszillator gegeben, womit dieser eine der gewünschten Phasenlage angepaßte Frequenz erzeugt. Bei der ersten Ultraschallmeßstrecke breitet sich die zur Strömungsrichtung parallele Komponente des Ultraschallstrahles in Strömungsrichtung, bei der zweiten Ultraschallmeßstrecke gegen die Strömungsrichtung aus.

Damit ergibt sich auf der ersten Ultraschallmeßstrecke eine für die Ultraschallausbreitung vom Sendewandler zum Empfangswandler wirksame Ausbreitungsgeschwindigkeit von

$$c_{1eff} = (c + \overline{v} \cos \beta),$$

für die zweite Ultraschallmeßstrecke von

$$c_{2eff} = (c - \overline{v} \cos \beta).$$

Unabhängig von der Strömungsgeschwindigkeit soll auf beide Ultraschallmeßstrecken die genau gleiche Anzahl n von Ultraschallwellenzügen passen. Dies bedeutet, da beide Ultraschallmeßstrecken gleich lang sind, daß die Ultraschallwellenlänge $\lambda$ auf beiden Ultraschallmeßstrecken gleich groß sein soll.

Es gilt:

$$\frac{c_{1eff}}{f_1} = \lambda = \frac{c_{2eff}}{f_2} .$$

Ferner gilt: $\lambda = \frac{l}{n}$ .

Daraus folgt:

$$f_1 = c_{1eff} \cdot \frac{n}{l} = (c + \overline{v} \cos \beta) \frac{n}{l}$$

$$f_2 = c_{2eff} \cdot \frac{n}{l} = (c - \overline{v} \cos \beta) \frac{n}{l} .$$

Wenn die Ultraschallwellenlänge $\lambda$ nicht auf beiden Ultraschallmeßstrecken exakt gleich ist, äußert sich dies darin, daß die Phasenlage des Ultraschallsignals am Empfangsort bezogen auf das jeweilige Sendesignal auf beiden Meßstrecken unterschiedlich ist. Die bereits erwähnte PLL sorgt durch Änderung der jeweiligen Sendefrequenz dafür, daß dies korrigiert wird und daß sich die Wellenlängen auf beiden Ultraschallmeßstrecken exakt gleichen. Das Verfahren kann daher auch als $\lambda$-Locked-Loop-Verfahren bezeichnet werden ($\lambda$ LL). Es gewähr-

leistet die Gültigkeit der oben aufgeführten Gleichungen. Dabei bedeuten:

$f_1$: erste Frequenz

$f_2$: zweite Frequenz

c : Schallgeschwindigkeit

$\overline{v}$ : mittlere Strömungsgeschwindigkeit

$\beta$ : Anstellwinkel

n : Anzahl der Ultraschallwellenzüge auf der Meßstrecke

l : Länge der Meßstrecke

$c_{1eff}$: wirksame Ausbreitungsgeschwindigkeit auf der ersten Ultraschallmeßstrecke

$c_{2eff}$: wirksame Ausbreitungsgeschwindigkeit auf der zweiten Ultraschallmeßstrecke

$\lambda$ : Ultraschallwellenlänge

Durch Subtraktion der Gleichung für $f_2$ von der Gleichung für $f_1$ wird nachgewiesen, daß die mittlere Strömungs-geschwindigkeit $\overline{v}$ aus der Differenz der beiden Frequenzen ohne Einfluß nichtkonstanter Größen ableitbar ist:

$$f_1 - f_2 = (c + \overline{v} \cos \beta) \frac{n}{l} - (c - \overline{v} \cos \beta) \frac{n}{l} .$$

Daraus ergibt sich:

$$f_1 - f_2 = 2 \overline{v} \cos \beta \frac{n}{l} .$$

Die mittlere Strömungsgeschwindigkeit $\overline{v}$ ergibt sich somit zu

$$\overline{v} = \frac{f_1 - f_2}{2 \cos \beta \frac{n}{l}} .$$

Sie ist also abgesehen von Vorrichtungskonstanten aus-schließlich durch die Differenz der beiden Frequenzen bestimmt. Damit entfallen alle Einflüsse, die sich aus den physikalischen Eigenschaften des Mediums, dessen Strömungsgeschwindigkeit zu messen ist, ergeben.

Eine vorteilhafte Weiterbildung der Erfindung sieht vor, daß eine einzige Ultraschallmeßstrecke vorgesehen ist, bei der die Wandler alternierend jeweils als Sendewandler bzw. Empfangswandler betrieben werden, so daß alternierend eine Ausbreitungskomponente der Ultraschallschwingungen in Strömungsrichtung bzw. gegen die Strömungsrichtung einstellbar ist, daß jeweils alternierend Ultraschallschwingungen mit der ersten Frequenz und der zweiten Frequenz gesendet werden und daß jeweils ein der ersten Frequenz und der zweiten Frequenz entsprechendes Signal bis zur Ableitung der mittleren Strömungsgeschwindigkeit gespeichert wird.

8 Patentansprüche
1 Figur

0006464

1

78 P 7058

<u>Patentansprüche</u>

1. Vorrichtung zum Messen von Strömungsgeschwindigkeiten mit Hilfe von Ultraschallschwingungen, bei der eine erste und eine zweite aus je einem Sende- und je einem Empfangswandler bestehende Ultraschallmeßstrecken angeordnet sind und bei der sich jeweils eine zur Strömungsrichtung parallel orientierte Ausbreitungskomponente der Ultraschallschwingungen in Strömungsrichtung bzw. gegen die Strömungsrichtung einstellt, dadurch g e k e n n z e i c h n e t , daß die erste Ultraschallmeßstrecke (6) mit Ultraschallschwingungen einer ersten Frequenz ($f_1$) und die zweite Ultraschallmeßstrecke (7) mit Ultraschallschwingungen einer zweiten Frequenz ($f_2$) betrieben werden, daß die erste Frequenz ($f_1$) und die zweite Frequenz ($f_2$) jeweils mittels einer an sich bekannten, einen spannungsgesteuerten Oszillator (VCO-voltage controlled oscillator) enthaltenden Phasenregelschleife (PLL-phase-locked loop) derart geregelt werden, daß sich am jeweils zugehörigen Empfangswandler (3 bzw. 5) unter allen Bedingungen eine auf das betreffende Sendesignal bezogene konstante Phasenlage des Empfangssignals einstellt, und daß die mittlere Strömungsgeschwindigkeit ($\overline{v}$) aus der Differenz zwischen der ersten Frequenz ($f_1$) und der zweiten Frequenz ($f_2$) abgeleitet wird.

2. Vorrichtung nach Anspruch 1, dadurch g e k e n n z e i c h n e t , daß eine einzige Ultraschallmeßstrecke vorgesehen ist, bei der die Wandler alternierend jeweils als Sendewandler bzw. Empfangswandler betrieben werden, so daß alternierend eine Ausbreitungskomponente der Ultraschallschwingungen in Strömungsrichtung bzw. gegen die Strömungsrichtung einstellbar ist, daß jeweils alternierend Ultraschallschwingungen mit der ersten Frequenz ($f_1$) und der zweiten Frequenz ($f_2$) gesendet werden und daß je-

0006464

weils ein der ersten Frequenz ($f_1$) und der zweiten Frequenz ($f_2$) entsprechendes Signal bis zur Ableitung der mittleren Strömungsgeschwindigkeit ($\overline{v}$) gespeichert wird.

3. Vorrichtung nach Anspruch 1 oder 2, dadurch g e - k e n n z e i c h n e t , daß die Differenz der ersten Frequenz ($f_1$) und der zweiten Frequenz ($f_2$) mit digitalen Zählern gebildet wird.

4. Vorrichtung nach Anspruch 3, dadurch g e k e n n - z e i c h n e t , daß die Differenz der ersten Frequenz ($f_1$) und der zweiten Frequenz ($f_2$) mit einem Vorwärts-Rückwärts-Zähler gebildet wird.

5. Vorrichtung nach Anspruch 1 oder 2, dadurch g e - k e n n z e i c h n e t , daß bei linearem Zusammenhang der jeweiligen Steuergröße für den spannungsgesteuerten Oszillator (VCO) mit der jeweils zugehörigen Frequenz ($f_1$ bzw. $f_2$) die Differenz beider Steuergrößen als meßwertproportionale Größe verwendet wird.

6. Vorrichtung nach Anspruch 5, dadurch g e k e n n - z e i c h n e t , daß die Differenz beider Steuergrößen durch Subtraktion ihrer Analogwerte gebildet wird.

7. Vorrichtung nach Anspruch 6, dadurch g e k e n n - z e i c h n e t , daß die Differenzbildung mit Hilfe eines Operationsverstärkers vorgenommen wird.

8. Vorrichtung nach Anspruch 5, dadurch g e k e n n - z e i c h n e t , daß die Differenz beider Steuergrößen durch Subtraktion ihrer digitalisierten Werte mit an sich bekannten Mitteln gebildet wird.